# EUROPÄISCHE PATENTANMELDUNG

(11) **EP 4 826 910 A1**
(43) Veröffentlichungstag der Anmeldung: **21.10.2026**
(21) Anmeldenummer: 25170688.3
(22) Anmeldetag: 15.04.2025
(51) Int. Cl.: H01Q 3/46, H01Q 15/00, H04B 7/145

(54) **SYSTEM ZUR ÜBERTRAGUNG VON FUNKWELLEN**

(71) Anmelder: Siemens Aktiengesellschaft, 80333 München (DE)
(72) Erfinder: Mayer, Lukas Walter, 1190 Wien (AT); Schiefer, Martin, 3100 St. Pölten (AT)
(74) Vertreter: Siemens Patent Attorneys

(57) **Zusammenfassung**

System zur Übertragung von Funkwellen, umfassend einen Sender (TX), einen Empfänger (RX), eine erste rekonfigurierbare intelligente Fläche (RIS1), und eine zweite rekonfigurierbare intelligente Fläche (RIS2), wobei der Sender (TX1) dazu eingerichtet ist, ein Sendesignal (IN1) zu erzeugen und in Richtung der ersten rekonfigurierbaren intelligenten Fläche (RIS1) abzustrahlen, und der Empfänger (RX1) dazu eingerichtet ist, ein Empfangssignal (OUT1) aus der Richtung der zweiten rekonfigurierbaren intelligenten Fläche (RIS2) zu empfangen, und die erste rekonfigurierbare intelligente Fläche (RIS1) konfiguriert ist, das Sendesignal (IN1) in Richtung der zweiten rekonfigurierbaren intelligenten Fläche (RIS2) zu reflektieren oder zu transmittieren, und die zweite rekonfigurierbare intelligente Fläche (RIS2) konfiguriert ist, das reflektierte oder transmittierte Signal in Richtung des Empfängers (RX) als Empfangssignal (OUT1) zu reflektieren oder zu transmittieren.

## Beschreibung

Die Erfindung betrifft ein System zur Übertragung von Funkwellen.

Mit einem elektronisch steuerbaren Reflektor (engl. "reconfigurable intelligent surface", kurz RIS) kann eine Funkkommunikation bei höheren Frequenzen, wie beispielsweise ab 20 GHz, und mit Hindernissen zwischen einem Sender und einem Empfänger verbessert werden.

Eine RIS besteht meist aus mehreren Antennenelementen, deren Größe und Geometrie im Allgemeinen gleich sind, wobei die Antennenelemente geometrisch an der Oberfläche eines Trägers angeordnet werden.

Ein Antennenelement empfängt entsprechend der jeweiligen Antenneneigenschaften mit einem bestimmten Gewinn die einfallende Leistungswelle des Senders. Mit einer Elektronik im Element wird diese Energie reflektiert und in Amplitude und/oder Phase verändert. Die Ansteuerung der Elektronik in den einzelnen Elementen wird so gewählt, dass die Summe der Einzelreflexionen der Antennenelemente sich am Empfänger konstruktiv überlagern.

Durch Verwendung eines elektronisch steuerbaren Reflektors kann eine Kommunikation zwischen Sender und Empfänger auch bei einer verdeckten Verbindung (engl. "non-line of sight") sichergestellt werden.

Die Reichweite der elektromagnetischen Funkkommunikation wird beispielweise durch den Pegelplan bestimmt, das heißt die Summe an Leistungsverlusten vom Sender bis zum Empfänger und der Berücksichtigung der Sendeleistung, der Empfängerempfindlichkeit und der Rauschleistung. In einem Pegelplan werden auch die Reflexionsverluste des elektronisch steuerbaren Reflektors berücksichtigt.

Mit Hilfe von rekonfigurierbaren intelligenten Reflektoren ist es ferner möglich, in einem Funksystem die Funkabdeckung beziehungsweise die Funk-Reichweite zu verbessern.

Das kann im Vergleich zum Einsatz von Verstärkern, wie beispielsweise mit sogenannten "Repeatern" allerdings mit deutlich geringeren Kosten und geringerem Energieverbrauch erreicht werden.

Ein Kosten Nutzen Vergleich von Funk-Kommunikationsnetzen, welche entweder mit RIS oder mit Verstärkern unterstützt werden, zeigen, neben den Vorteilen der RIS jedoch auch spezifische Nachteile auf.

Ein wichtiger Nachteil ist die mögliche Interferenz von unterschiedlichen Kommunikationsnetzwerken, welche die gleiche Fläche versorgen und nahe benachbarte, aber unterschiedliche, Frequenzbändern nutzen.

Eine RIS hat aufbaubedingt ein sehr breitbandiges Reflexionsverhalten und kann nicht frequenzselektiv arbeiten.

Damit ist es möglich, dass eine RIS für ein erstes Kommunikationssystem A hinsichtlich Einfalls- und Ausfallswinkels der Elektromagnetischen Welle optimiert werden kann.

Die Signale eines weiteren Kommunikationssystems B können aber dadurch ebenfalls von der RIS reflektiert werden und können zu Störungen im Kommunikationssystem B führen.

Im Stand der Technik werden RIS-Komponenten in der Forschung untersucht, und erste Produkte sind am Markt verfügbar, wobei ein Einsatz der RIS-Technologie in bestehenden Kommunikationsnetzen aber nicht bekannt ist.

Ein Grund dafür ist, dass die Netzbetreiber gegenüber der RIS Technologie Vorbehalte haben, denn RIS nach dem aktuellen Stand der Technik können Störungen zwischen räumlich benachbarten, aber frequenzmäßig getrennten Funknetzwerken von zwei unabhängigen Betreibern verursachen, da RIS breitbandig arbeiten und keine Möglichkeit zur Filterung bieten, um Frequenzbereiche unterschiedlicher Betreiber zu unterscheiden.

Es können also alle Signale, die in den Empfangsbereich der RIS eindringen, ebenfalls wieder fokussiert abgestrahlt werden.

Die aktuellen RIS-Realisierungen sind also in der Lage Signale einer Funkwelle, mit einstellbarem Ein- und Ausfallswinkel zu fokussieren und so eine deutliche Signalverstärkung zu erzielen.

Sie können aber auch Signale aus anderen Einfallswinkeln ungewollt fokussieren und so Störungen verursachen.

In der Veröffentlichung Naveed UI Hassan, et al., "Efficient Beamforming and Radiation Pattern Control Using Stacked Intelligent Metasurfaces", IEEE Open Journal of the Communications Society ( Volume: 5), Pages 599 - 611, 02 January 2024, Electronic ISSN: 2644-125X, DOI: 10.1109/OJCOMS.2023.3349155 ist eine gestapelte intelligente Metaoberfläche (kurz SIM) mit der Fähigkeit zur Strahlformung im elektromagnetischen (EM) Wellenbereich gezeigt, bei welchem Pfadverlustmodell, mit dem die empfangene Leistung des Signals nach dem Durchgang durch die SIM mit deren mehreren Lagen im Antennen-Aufbau berechnet werden kann.

Es ist Aufgabe der Erfindung eine Lösung mit rekonfigurierbaren intelligenten Reflektoren bereitzustellen, welche den Stand der Technik verbessert, und eine raumwinkelselektive Steuerung einer Übertragungsstrecke eines Funksystems ermöglicht.

Die erfindungsgemäße Aufgabe wird durch ein System zur Übertragung von Funkwellen gelöst, umfassend einen Sender, einen Empfänger, eine erste rekonfigurierbare intelligente Fläche, und zumindest eine zweite rekonfigurierbare intelligente Fläche, wobei der Sender dazu eingerichtet ist, ein Sendesignal zu erzeugen und in Richtung der ersten rekonfigurierbaren intelligenten Fläche abzustrahlen, und der Empfänger dazu eingerichtet ist, ein Empfangssignal aus der Richtung der zumindest einen zweiten rekonfigurierbaren intelligenten Fläche zu empfangen, und die erste rekonfigurierbare intelligente Fläche konfiguriert ist, das Sendesignal in Richtung der zumindest einen zweiten rekonfigurierbaren intelligenten Fläche zu reflektieren oder zu transmittieren, und die zumindest eine zweite rekonfigurierbare intelligente Fläche konfiguriert ist, das reflektierte oder transmittierte Signal in Richtung des Empfängers als Empfangssignal zu reflektieren oder zu transmittieren.

Durch die Kombination von zwei RIS-Baugruppen in Serie ist es möglich eine räumliche Winkelselektion zu realisieren.

Das heißt, dass eine gewünschte Kombination von Einfalls- und Ausfallswinkel durch eine geeignete Parametrierung der beiden RIS erreicht werden kann und gleichzeitig Reflexionseigenschaften für Signale aus anderen Einfallswinkeln, im Vergleich zu allen anderen Winkelkombinationen stark unterdrückt werden.

Mit nur einer RIS gibt es immer mehrere Winkelkombinationen, mit denen eine Verstärkung erzeugt wird.

Mit der so erzielten Eigenschaft der räumlichen Winkelselektion kann eine störende Beeinflussung einer RIS A, die zur Unterstützung des Kommunikationsnetzes A verwendet wird, eines Kommunikationsnetzes B, minimiert bzw. zur Gänze vermeiden werden, wenn das Kommunikationsnetz B Signale erzeugt, welche außerhalb des eingestellten Empfangsbereiches der RIS A liegen.

Funkwellen können durch Sendesignale, welche mithilfe einer Sendeantenne von einem Sender abgestrahlt werden, erzeugt werden, und mithilfe einer Empfangsantenne durch einen Empfänger wieder empfangen werden.

Funkwellen sind elektromagnetische Wellen und können sich im freien Raum ausbreiten.

Die Selektion ist dann besonders hoch, wenn das eingangsseitige Richtdiagramm der RIS, für das Signale in Richtung der zweiten RIS fokussiert nur geringe Nebenkeulen aufweist.

Diese Eigenschaft der RIS ist durch die Anordnung der Elemente, die Möglichkeiten zur Signalmodifikation in den Elementen und den winkelmäßigen Akzeptanzbereich der RIS bestimmt.

Eine vorteilhafte Ausführungsform weist Elemente auf, bei denen zumindest drei unterschiedliche Signalmodifikationszustände gewählt werden können.

Eine vorteilhafte Ausführungsform hat einen Abstand d zwischen den beiden RIS, welcher von der Wellenlänge *λ* und den wirksamen Flächen der beiden RIS *A*₁ und *A*₂ wie folgt abhängt: $d = \sqrt{\frac{{A}_{1} {A}_{2}}{{λ}^{2}}}$

Diese Anordnung unterscheidet sich von aus der Literatur bekannten "stackable RIS", da bei diesen der Abstand zwischen den RIS im Bereich von wenigen Wellenlängen liegt, wobei hier der Abstand viele Wellenlängen beträgt.

Diese Beziehung erlaubt eine Anordnung, bei welcher die erste RIS eine effiziente Ausleuchtung der zweiten RIS gewährleistet.

Bei starken Abweichungen von dieser Beziehung geht ein zunehmender Anteil der Signalenergie an der zweiten RIS vorbei und steht nicht mehr für Kommunikation zur Verfügung, oder es wird nur ein Teilbereich der zweiten RIS beleuchtet, was zu einer schlechteren Fokussierung des Funksignals führt.

Bei Verwendung von zwei RIS ohne aktive Verstärkung, wird durch die Fokussierung der Signale keine zusätzliche Verbesserung durch die zweite RIS im Vergleich zur Anordnung mit nur einer RIS erzielt.

Dadurch kann erreicht werden, dass nur Signale in einer gewünschten Winkelkombination im Vergleich zu allen anderen Winkelkombinationen verstärkt werden.

Ferner kann bei der Verwendung von zwei RIS, deren Elemente mit aktiven Verstärkern ausgestattet sind, zusätzlich zum Gewinn, der durch Fokussierung der Signale bewirkt wird, eine um die aktiven Verstärkergewinne höhere Gesamtverstärkung der Anordnung erreicht werden.

Gegenüber dem Stand der Technik kann eine räumliche Winkelselektion zur Minimierung der Störung anderer Funknetze erzielt werden.

In einer Weiterbildung der Erfindung ist es vorgesehen, dass die erste und die zumindest eine zweite rekonfigurierbare intelligente Fläche konfiguriert sind, jeweils zu reflektieren, oder jeweils zu transmittieren.

Dadurch wird ein besonders einfach zu konfigurierendes System erhalten.

In einer Weiterbildung der Erfindung ist es vorgesehen, dass die erste und die zumindest eine zweite rekonfigurierbare intelligente Fläche jeweils eine umrahmende Begrenzung der Fläche aufweisen, und an gedachten Verbindungen der jeweiligen umrahmenden Begrenzungen zumindest teilweise ein, die Funkwellen absorbierendes Dämpfungsmaterial, zwischen der ersten und der zumindest einen zweiten rekonfigurierbare intelligente Fläche angeordnet ist.

Dadurch kann erreicht werden, dass unerwünschte Signale, welche aufgrund von Nebenkeulen von der ersten RIS abgestrahlt werden, durch absorbierende Maßnahmen im Bereich um die zweite RIS vorteilhaft gedämpft werden.

Die Erfindung wird anhand von Ausführungsbeispielen in den nachfolgenden Figuren näher beschrieben. Dabei zeigt
- Fig. 1: ein erstes Ausführungsbeispiel der Erfindung mit zwei reflektiv konfigurierten intelligente Flächen,
- Fig. 2: ein zweites Ausführungsbeispiel der Erfindung mit zwei transmissiv konfigurierten intelligente Flächen,
- Fig. 3: ein drittes Ausführungsbeispiel der Erfindung mit zwei transmissiv konfigurierten intelligente Flächen und Absorbern.

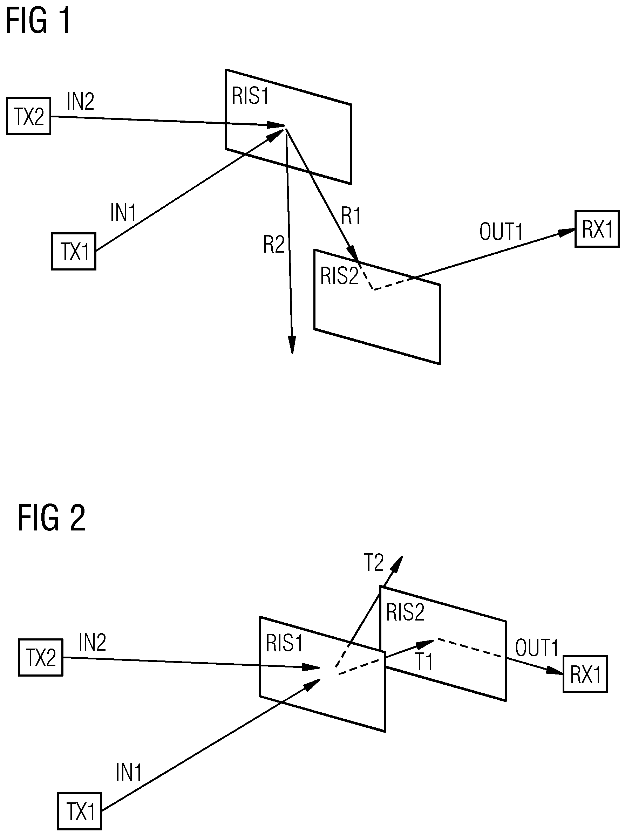

**Fig. 1** zeigt ein erstes Ausführungsbeispiel der Erfindung mit zwei reflektiv konfigurierten intelligente Flächen RIS1, RIS2.

Nur für eine Winkelkombination der beiden RIS 1 und RIS2 gibt es einen Übertragungspfad R1 zwischen dem Sendesignal IN1 von einem Sender TX1 und dem Empfangssignal OUT1 des Empfängers RX.

Der Sender TX1 ist an einem ersten Sendeort gelegen.

Der Empfänger RX1 ist an einem Empfangsort gelegen.

Für andere Winkelkombination der beiden RIS1 und RIS2 gibt es jedoch keinen Übertragungspfad zwischen einem Sendesignal IN2 eines Senders TX2, welcher an einem zweiten Sendeort, einem anderen Ort als an welchem der Sender TX1 gelegen ist, und dem Empfangssignal OUT1, wodurch der Übertragungspfad des Signals R2 nicht auf RIS2 gelangt und daher nicht zum Empfänger RX geleitet wird beziehungsweise nicht entsprechend fokussiert wird.

Diese Anteile können beispielsweise durch absorbierende Maßnahmen gedämpft werden.

Zwischen dem ersten und dem zweiten Sendeort sind die erste und die zweite rekonfigurierbare intelligente Fläche RIS1, RIS2 angeordnet.

Die erste und die zweite rekonfigurierbare intelligente Fläche RIS1, RIS2 sind in diesem Beispiel derart konfiguriert, jeweils zu reflektieren.

**Fig. 2** zeigt ein zweites Ausführungsbeispiel der Erfindung mit zwei transmissiv konfigurierten intelligente Flächen RIS1, RIS2, welche auch als transparent konfigurierte intelligente Flächen bezeichnet werden.

Mit transparenten RIS-Realisierungen können alle Leistungsanteile im einfallenden Signal, die unerwünscht sind, unterdrückt werden, indem sie in andere Richtungen geleitet werden.

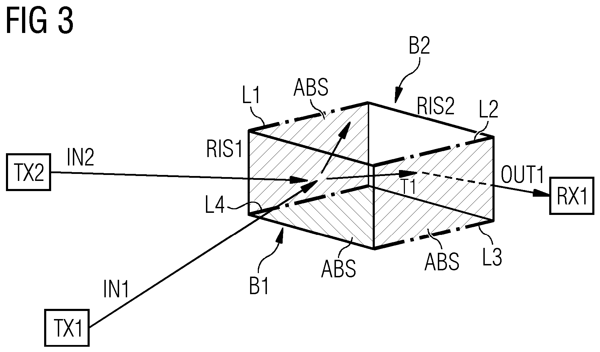

**Fig. 3** zeigt ein drittes Ausführungsbeispiel der Erfindung mit zwei transmissiv konfigurierten intelligente Flächen und Absorbern RIS1, RIS2

Die Anordnung entspricht der vorhergehenden Figur, jedoch sind zusätzlich Absorber-Flächen mit Funkwellen absorbierendem Material angeordnet, welche eine Art "Tunnel" zwischen RIS1 und RIS2 mit absorbierenden Wänden ausbilden, wobei die Funkwellen durch die für die Funkwellen transparent wirkende RIS1 in den Tunnel eintreten und durch für die Funkwellen transparent wirkende RIS 2 wieder austreten.

Dementsprechend können in allgemeiner Weise auch die Ausführungsbeispiele der Figuren 1 und 2 mit jeweiligen RIS als Reflektor oder als Transmitter konfiguriert ausgebildet sein, oder eine Kombination davon.

Ferner ist auch eine Anordnung möglich, bei welcher die jeweiligen RIS nur teilweise als Reflektor und/oder als Transmitter konfiguriert ausgebildet sind, das heißt ein Teil der Fläche oder ein Teil der zugeordneten einzelnen Antennen-Elemente dementsprechend konfiguriert ist.

Die erste und die zweite rekonfigurierbare intelligente Fläche RIS1, RIS2 weisen jeweils eine rechteckige umrahmende Begrenzung B1, B2 der rechteckigen Fläche der ersten und zweiten rekonfigurierbaren intelligenten Fläche RIS1, RIS2 auf.

Verbindet man jeweils die Eckpunkte der gegenüberliegenden umrahmenden Begrenzungen B1, B2 mit gedachten Verbindungen L1-L4, so entsteht ein gedachtes Rechteckrohr zwischen RIS1 und RIS2.

An diesem gedachten Rechteckrohr mit zwei offenen Enden, in welchen jeweils die erste und die zweite rekonfigurierbare intelligente Fläche RIS1 und RIS2 angeordnet sind, ist nun an dessen Oberflächen absorbierendes Dämpfungsmaterial ABS angeordnet.

Die erste und die zweite rekonfigurierbare intelligente Fläche RIS1 und RIS2 müssen dabei nicht notwendigerweise die gesamte Fläche, welche durch die umrahmenden Begrenzungen B1, B2 gebildet ist, bedecken.

Das absorbierende Dämpfungsmaterial ABS formt somit zwischen der ersten und der zweiten rekonfigurierbaren intelligenten Fläche (RIS1, RIS2) eine innen hohle Röhre mit absorbierendem Material, welches die durch das innen hohle Rechteckrohr Funkwellen leitet.

Es ist klar, dass auch andere geometrische Formen für die Verbindung zwischen der ersten und zweiten rekonfigurierbaren intelligente Fläche RIS1, RIS2 anwendbar sind, wie beispielsweise runde umrahmende Begrenzungen, welche einen gedachten Zylinder bilden.

Die hohle Röhre kann optional auch mit einem elektromagnetisch durchlässigen Material gefüllt sein, um der Röhre eine mechanische Stützstruktur zu bieten, wobei die Röhre elektromagnetisch transparent bleibt.

Jene Funkwellen, die nicht durch das hohle Rechteckrohr hindurch geleitet werden, sondern durch eine entsprechende Reflexion an der ersten rekonfigurierbaren intelligenten Fläche RIS1 an die Innenflächen des absorbierenden hohlen Rechteckrohrs geleitet werden, werden somit absorbiert beziehungsweise unterdrückt.

Die erste und die zweite rekonfigurierbare intelligente Fläche RIS1, RIS2 sind in diesem Beispiel derart konfiguriert, jeweils zu transmittieren.

Eine weitere mögliche Ausführungsvariante, in den Figuren nicht dargestellt, ist dadurch gegeben, dass mehrere rekonfigurierbare intelligente Flächen, beispielsweise auf den Seitenflächen eines Würfels angeordnet sind, wie beispielsweise auf allen sechs Seitenflächen des Würfels.

Dabei ist eine erste rekonfigurierbare intelligente Fläche RIS1 vorgesehen, welche konfigurierbar ist, zu weiteren zweiten rekonfigurierbaren intelligenten Flächen RIS2 zu reflektieren oder zu transmittieren, oder sogar zu absorbieren.

Eine Absorption an zumindest einer weiteren zweiten rekonfigurierbaren intelligenten Fläche RIS2 wird erreicht, indem der jeweilige Antennenwiderstand der jeweiligen zweiten rekonfigurierbaren intelligenten Fläche RIS2, beziehungsweise deren Einzelelementen, welche die rekonfigurierbare intelligente Fläche bilden, entsprechend konfiguriert wird.

Eine Konfiguration als eine Anpassung an den relevanten Wellenwiderstand erfolgt, indem die Steuerimpedanz einem an die Antenne leistungsangepassten Zustand entspricht.

Durch gezielte Steuerung einer jeweiligen Reflexion oder Transmission der jeweiligen zweiten rekonfigurierbaren intelligenten Fläche RIS2 kann eine Formung vom RIS1 ausgehenden Signals entsprechend erfolgen, beziehungsweise eine Emission in eine bestimmte Richtung gelenkt werden.

Dadurch kann der Übertragungsbereich des Systems, also der Bereich zwischen Sender TX1 und Empfänger RX, deutlich vergrößert wird.

*Unabhängig vom grammatikalischen Geschlecht eines bestimmten Begriffes sind Personen mit männlicher, weiblicher oder anderer Geschlechteridentität mit umfasst.*

### Bezugszeichenliste

- ABS: absorbierendes Material
- B1, B2: begrenzenden Umrahmung
- IN1, IN2: Sendesignal
- L1-L4: gedachte Linien
- OUT1: Empfangssignal
- R1, R2: reflektiertes Signal
- RIS1, RIS2: rekonfigurierbarer intelligenzter Reflektor
- RX1: Empfänger
- T1, T2: transmittiertes Signal
- TX1, TX2: Sender

## Patentansprüche

1. System zur Übertragung von Funkwellen, umfassend einen Sender (TX), einen Empfänger (RX), eine erste rekonfigurierbare intelligente Fläche (RIS1), und zumindest eine zweite rekonfigurierbare intelligente Fläche (RIS2),
wobei der Sender (TX1) dazu eingerichtet ist, ein Sendesignal (IN1) zu erzeugen und in Richtung der ersten rekonfigurierbaren intelligenten Fläche (RIS1) abzustrahlen,
und der Empfänger (RX1) dazu eingerichtet ist, ein Empfangssignal (OUT1) aus der Richtung der zumindest einen zweiten rekonfigurierbaren intelligenten Fläche (RIS2) zu empfangen, und die erste rekonfigurierbare intelligente Fläche (RIS1) konfiguriert ist, das Sendesignal (IN1) in Richtung der zumindest einen zweiten rekonfigurierbaren intelligenten Fläche (RIS2) zu reflektieren oder zu transmittieren,
und die zumindest eine zweite rekonfigurierbare intelligente Fläche (RIS2) konfiguriert ist, das reflektierte oder transmittierte Signal in Richtung des Empfängers (RX) als Empfangssignal (OUT1) zu reflektieren oder zu transmittieren.

2. System nach dem vorhergehenden Anspruch, wobei die erste und die zumindest eine zweite rekonfigurierbare intelligente Fläche (RIS1, RIS2) konfiguriert sind, jeweils zu reflektieren, oder jeweils zu transmittieren.

3. System nach einem der vorhergehenden Ansprüche, wobei die erste und die zumindest eine zweite rekonfigurierbare intelligente Fläche (RIS1, RIS2) jeweils eine umrahmende Begrenzung (B1, B2) der Fläche aufweisen, und an gedachten Verbindungen (L1-L4) der jeweiligen umrahmenden Begrenzungen (B1, B2) zumindest teilweise ein, die Funkwellen absorbierendes Dämpfungsmaterial (ABS), zwischen der ersten und der zumindest einen zweiten rekonfigurierbaren intelligenten Fläche (RIS1, RIS2) angeordnet ist.
